# EUROPÄISCHE PATENTANMELDUNG

(11) **EP 0 760 587 A1**
(43) Veröffentlichungstag der Anmeldung: **05.03.1997**
(21) Anmeldenummer: 95113400.6
(22) Anmeldetag: 25.08.1995
(51) Int. Cl.: H04Q 11/04, H04Q 7/24

(54) **Funkteilnehmeranschluss unter Verwendung eines hybriden Glasfaser-Koaxialkabel-Breitband-Anschlussnetzes**

(71) Anmelder: SIEMENS AKTIENGESELLSCHAFT, 80333 München (DE)
(72) Erfinder: Lechner, Robert, A-3171 Böheimkirchen (AT)

(57) **Zusammenfassung**

Funkbasisstationen (RBS) für die Funkteilnehmer (Fu) werdem woe ISDN-Teilnehmer an Abzweigungen des Koaxialkabels (Koax) angeschlossen. Die 16kBit/s-D-Kanäle mehrerer Funkbasisstationen werden in einer zwischen den Glasfaserstrecken und der Vermittlungsstelle (LE) liegenden Funktionseinheit zu einem 64kBit/s-Signalisierungskanal zusammengefaßt und dieser wird zusammen mit zu den Funkbasisstationen führenden 64kBit/s-B-Kanälen einer PCM30-Leitung (PCM30) zugeführt, die an eine zentrale Funksteuereinheit (RDU) angeschlossen ist und dort funktionsgleich behandelt wird wie in einem Radio-Local-Loop-System die an dessen zentrale Steuerung angeschlossenen, von dezentralen konzentrierenden Einrichtungen kommenden Leitungen.

## Beschreibung

Die Erfindung betrifft einen Funkteilnehmeranschluß unter Verwendung eines hybriden Glasfaser-Koaxialkabel-Breitband-Anschlußnetzes gemäß dem Oberbegriff des Patentanspruchs 1.

Funkteilnehmeranschlüsse, wie sie von etablierten Betreibern angeboten werden, die über eine Infrastruktur für den konventionellen Anschluß von Fernsprechendgeräten verfügen, machen Gebrauch von existierenden Zweidraht-Kupferleitungen, mit einer U-Schnittstelle für die Übertragung von ISDN-Informationen, die zwischen Funkbasisstationen und konzentrierenden Einheiten verlaufen, von denen aus eine Übertragungsstrecke zu einer zentralen vorzugsweise am Ort einer konventionellen Fernsprechvermittlungsstelle angeordneten Funksteuereinheit besteht. Die Luftschnittstelle eines solchen Funkanschlußnetzes besteht zwischen den erwähnten Funkbasisstationen und entweder Schnurlosteilnehmerendgeräten direkt oder zwischen den Funkbasisstationen und teilnehmerseitigen Schnittstellen, die eine Kommunikationssteckdose darstellen, an die Fernsprechendgeräte oder ganze Nebenstellenanlagen angeschlossen sind.

Insbesondere nichtkonventionelle Anbieter verfügen über Anschlußnetze, die unter Verwendung von Lichtwellenleitern aufgebaut sind, die nicht nur wie ursprünglich vorgesehen Verteildiensten dienen, sondern auch für interaktive Dienste, also für die Abwicklung von Fernsprechverkehr ausgestattet sind. Dabei werden die Lichtwellenleiter, also die Glasfaserstrecken, möglichst nahe zum Teilnehmer herangeführt, wo ein Übergang zu einem Koaxialkabelnetz stattfindet, an dessen Koaxialkabelstrecken Teilnehmerendgeräte, unter anderem ISDN-Teilnehmerendgeräte über entsprechende Schnittstellenschaltungen angeschaltet sind.

Es handelt sich hier also um hybride Glasfaser-Koaxialkabel-Breitband-Anschlußnetze.

Die Aufgabe der Erfindung besteht nun darin, einen Funkteilnehmeranschluß anzugeben, der ein solches hybrides Glasfaser-Koaxialkabel-Breitband-Anschlußnetz mitausnutzt.

Diese Aufgabe wird mittels der im Kennzeichen des Patentanspruchs 1 angegebenen Merkmale gelöst.

Demnach werden die Funkbasisstationen für die Funkteilnehmer, wie Schnittstellenschaltungen für ISDN-Teilnehmer an die Abzweigungen der Koaxialkabelstrecken des hybriden Anschlußnetzes angeschlossen. In der Datenübergabeeinrichtung DFR, die zu einer vermittlungsstellenseitigen Schnittstelleneinheit des Hybridnetzes gehört, werden die 16kBit/s-D-Kanäle gemäß dem ISDN-Übertragungsprotokoll mehrerer Funkbasisstationen zu einem 64kBit/s-Signalisierungskanal zusammengefaßt. Dieser zusammengefaßte Signalisierungskanal wird mit mehreren mit Funkbasisstationen verbindenden 64kBit/s-B-Kanälen zusammengefaßt und wenigstens einer PCM30-Leitung zugeführt. Diese wenigstens eine PCM30-Leitung ist an eine zentrale Funksteuereinheit RDU angeschlossen und wird dort funktionsgleich behandelt wie in einem Radio-Local-Loop-Funkanschlußnetz (RLL) die an eine zentrale Funksteuereinheit angeschlossenen Leitungen, die von dezentralen konzentrierenden Einheiten dieses Funkanschlußnetzes kommen.

Bei einer solchen Art des Anschlusses werden einerseits in großem Umfang Teile des Hybridnetzes für den Funkteilnehmeranschluß, insbesondere die Übertragungswege, ausgenutzt und bei den für die Funkteilnehmeranschluß spezifischen Teilen kann auf die Technologie von RLL-Funkanschlußnetzen zurückgegriffen werden.

Der letztgenannte Umstand führt auch dazu, daß für den erfindungsgemäßen Funkteilnehmeranschluß und ein gegebenenfalls parallel im Einzugsbereich derselben Vermittlungsstelle betriebenes RLL-Funkanschlußnetz, gemäß einer weiteren im Anspruch 2 angegebenen Ausgestaltung der Erfindung die zentrale Funksteuereinheit sowie die mit der Fernsprechvermittlungsstelle verbindende wenigstens eine Verbindungsleitung gemeinsam genutzt werden können.

Weitere Ausgestaltungen der Erfindung sind in den übrigen Unteransprüchen angegeben.

Bei der Weiterbildung gemäß Anspruch 3 erfolgt der Transport der Übertragungsprotokolle des Funkanschlusses oberhalb jener Protokollschicht, die von der Datenübergabeeinrichtung des Hybridnetzes benutzt wird mit der Folge, daß für den Funkteilnehmeranschluß und für die ursprüngliche an die Koaxialstrecken des Hybridnetzes angeschlossenen Teilnehmer dieselbe Datenübergabeeinrichtung verwendet werden kann.

Alternativ hierzu ist gemäß Anspruch 4 für den Funkteilnehmeranschluß eine gesonderte Datenübergabevorrichtung vorgesehen, die auch die Übertragungsprotokolle des Funkteilnehmeranschlusses transportiert.

Weitere Ausgestaltungen der Erfindung gemäß den Ansprüchen 5 und 6 betreffen die Realisierung der Schnittstellen zwischen den Funkbasisstationen und den Abzweigungen der Koaxialkabelstrecken des Hybridnetzes, nämlich im einen Fall unter Beibehaltung einer Funkbasisstation in der Technologie des RLL-Funkanschlußnetzes und unter Verwendung einer speziellen Schnittstellenschaltung, die unter anderem in Anpassung an den Betrieb einer solchen Funkbasisstation eine U-Schnittstelle realisiert, und im anderen Fall in Form einer Einheit, bei der Schnittstellenschaltung und Funkbasisstation integriert sind.

Gemäß Anspruch 7 werden die Koaxialkabelstrecken für die Fernspeisung einer solchen integrierten Schnittstellen-Funkbasis-Einheit mitausgenutzt.

Nachstehend wird die Erfindung anhand eines Ausführungsbeispiels unter Bezugnahme auf eine Zeichnung näher erläutert.

In der Zeichnung zeigen:
Figur 1 ein hybrides Glasfaser-Koaxialkabel-Breitband-Anschlußnetz, wie es erfindungsgemäß für einen Funkteilnehmeranschluß mitausgenutzt wird.
Figur 2 einen erfindungsgemäßen Funkteilnehmeranschluß, wobei auch der gemäß weiterer Erfindung vorgesehene Parallelbetrieb eines RLL-Funkanschlußnetzes gezeigt ist.
Figuren 3 und 4 Anschlußvarianten der Schnittstellen für den Anschluß der Funkteilnehmer an die Koaxialstrecken des Hybridnetzes.

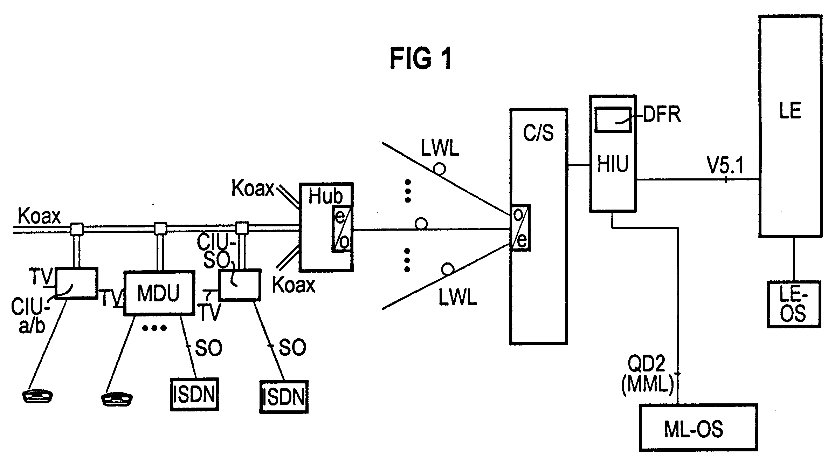

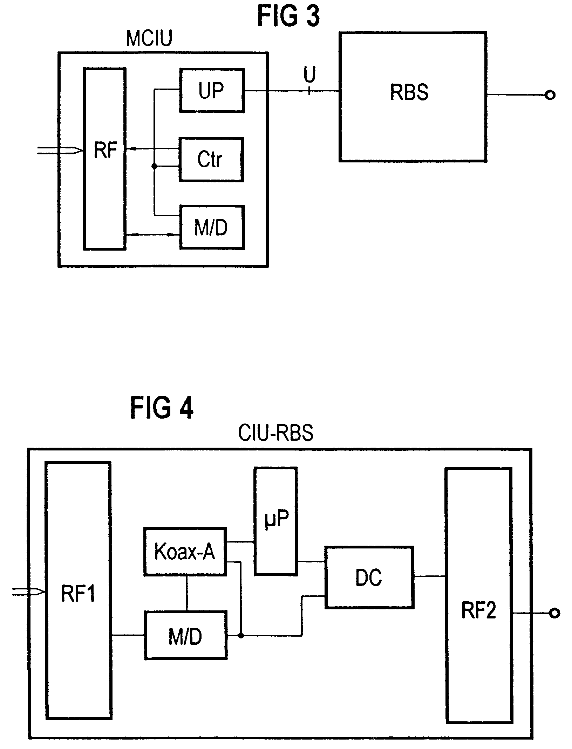

Das hybride Glasfaser-Koaxilkabel-Breitband-Anschlußnetz gemäß Figur 1 dient dem Teilnehmeranschluß an eine Fernsprechvermittlungsstelle LE.

Im teilnehmernahen Bereich weist dieses Anschlußnetz als Anschlußleitungen Koaxialkabel Koax auf, die an eine Einheit Hub angeschlossen sind, in der eine Umsetzung der elektrischen Signale der Koaxialkabel auf optische Signale für die Übertragung auf Glasfaserkabel durch einen zentralen elektro-optischen Umsetzer stattfindet. Der Teilnehmeranschluß an diese Koaxialkabel erfolgt an Abzweigungen desselben über teilnehmerspezifische Schnittstellenschaltungen, wie der Schnittstellenschaltung CIU-a/b für den Anschluß eines analogen Fernsprechendgerätes sowie gegebenenfalls eines Fernsehgerätes, der Anschlußschaltung CIU-SO für den teilnehmerindividuellen Anschluß von ISDN-Endgeräten und ebenfalls eines Fernsehgerätes sowie in Form der Schnittstellenschaltung MDU, die für eine größere Wohneinheit gedacht ist und dem Anschluß jeweils einer Mehrzahl sowohl konventioneller Fernsprechendgeräte als auch von ISDN-Endgeräten und Fernsehempfängern dient.

Die Signalübertragung zwischen der Einrichtung Hub und vermittlungsnahen Einrichtungen erfolgt über eine Glasfaserleitung, die den genannten elektro-optischen Umsetzer mit einem zentralen elekto-optischen Umsetzer verbindet, der durch Zusammenfassung mehrerer dezentraler Umsetzer mittels elektrischer Combiner/Splitter C/S entstanden ist. Diese Combiner/Splitter dienen auch zum Ein- und Auskoppeln der Signale für andere Dienste, z.B. für interaktives Fernsehen.

Als vermittlungsseitige Einrichtung ist die Einheit HIU vorgesehen, die Vermittlungs- und Signalisierungsfunktionen für die über das Koaxialkabel angeschlossenen Teilnehmer durchführt. Sie ist über eine Kupferleitung mit der Vermittlungsstelle LE verbunden. Als Bestandteil dieser Schnittstellenschaltung ist eine Datenübergabe-Einrichtung DRF (Data Frame Relay) zu erwähnen, die als Multiplexer für die Signalisierungskanäle der angeschlossenen ISDN-Teilnehmer dient.

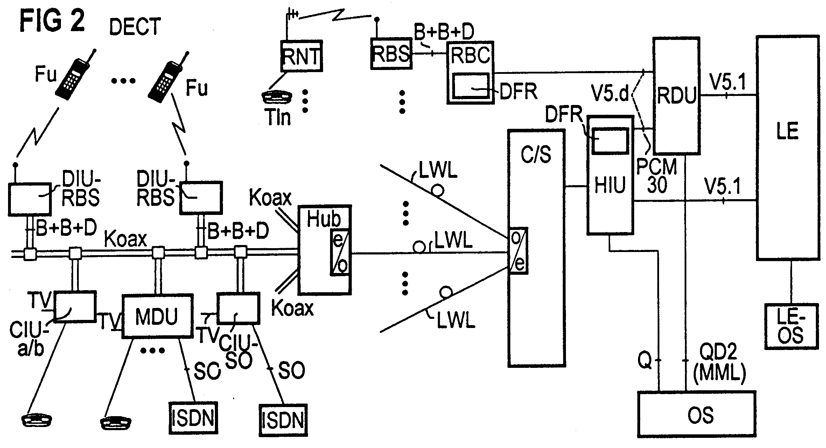

Wie die Figur 2 zeigt, sind an eine Koaxialleitung Koax eines hybriden Glasfaser-Koaxialkabel-Breitband-Anschlußnetzes der beschriebenen Art auch Funkteilnehmer Fu angeschlossen. Dieser Anschluß erfolgt über Einheiten DIU-RBS, in denen jeweils eine Funkbasisstation und eine Schnittstelleneinheit integriert sind.

Die Funkbasisstation eines Funkanschlusses enthält alle erforderlichen Einrichtungen für das Senden und Empfangen von Funkinformationen und Signalisierungsinformationen von und zu dem Funkteilnehmerendgerät.

Der Schnittstellenanteil der Einheiten DIU-RBS bildet eine U-Schnittstelle, d.h. also, daß die Funkbasisstationen wie ISDN-Teilnehmer an die Abzweigungen von dem Koaxialkabel Koax angeschlossen sind.

Als weitere zu den Teilen des hybriden Anschlußnetzes im Hinblick auf den Funkanschluß kommende Einheit ist eine zentrale Funksteuereinheit RDU zu erwähnen. Die für die Signalisierung zwischen den Funkteilnehmerendgeräten Fu und der Vermittlungsstelle bzw. der erwähnten zentralen Funksteuereinheit dienenden 16kBit/s-D-Kanäle werden in der Einheit DFR der Funktionseinheit HIU des Hybridnetzes zu einem 64 kBit/s-Signalisierungskanal zusammengefaßt. Dieser Signalisierungskanal wird zusammen mit mehreren zu Funkbasisstationen führenden 64kBit/s-B-Kanälen für eine Übertragung auf wenigstens einer PCM30-Leitung PCM30 zusammengefaßt, die die Funktionseinheit HIU mit der zentralen Funksteuereinheit RDU verbindet. Dort wird diese PCM30-Leitung für vermittlungstechnische Funktionen funktionsgleich bedient wie in einem RLL-Funkanschlußnetz die an dessen zentrale Funksteuereinheit angeschlossenen von dezentralen konzentrierenden Einheiten kommenden Leitungen. Wie vorstehend erwähnt, kann aufgrund dieser Art der Behandlung die entsprechende Technologie von RLL-Anschlußnetzen übernommen werden, andererseits ist es dadurch möglich, den erfindungsgemäßen Funkteilnehmeranschluß an einer zentralen Funksteuereinheit gemeinsam mit einem RLL-Anschlußnetz zu betreiben.

In der Figur ist ein solcher Parallelbetrieb dargestellt, der jedoch nicht Voraussetzung für die Anwendung der Erfindung ist. Zu einem solchen RLL-Anschlußnetz gehören teilnehmerseitig Teilnehmeranschlußeinheiten RNT, an die eine Mehrzahl von Teilnehmerendgeräten Tln angeschlossen sind, sowie Funkbasisstationen RBS. Zwischen den Teilnehmeranschlußeinheiten RNT und den Funkbasisstationen RBS besteht die Funkstrecke. Die Funkbasisstationen sind über eine Zweidrahtleitung und eine U-Schnittstelle U an konzentrierende dezentrale Einheiten RBC angeschlossen und diese über eine PCM30-Leitung an eine zentrale Funksteuereinheit RDU, bei der es sich hier um dieselbe handeln kann, die auch für die Funkteilnehmer Fu, die an das hybride Anschlußnetz angeschlossen sind, maßgeblich ist.

Der Betrieb des Funkteilnehmeranschlusses sowie des RLL-Anschlußnetzes gehorchen vorzugsweise dem DECT-Standard. Alternativ kommt auch der PACS-Standard, der in USA gebräuchlich ist, zum Einsatz.

Wie schon angegeben, sind bei dem dargestellten Ausführungsbeispiel die Funkbasisstationen mit Schnittstellenschaltungen zum Anschluß an das Koaxialkabel integriert und bilden die Einheiten DIU-RBS. Diese Einheiten haben dann eine Ausbildung wie sie in Figur 4 gezeigt ist, enthalten also sowohl die Bestandteile zur Realisierung des Übergangs von und zum Koaxialkabel als auch diejenigen zur Realisierung der Funktionen der Funkbasisstation. Im erstgenannten Fall sind dies ein Modulator/Demodulator M/D, ein hier mit Koax-A bezeichneter ASIC sowie eine Funkfrequenzeinrichtung RF1. Im zweigenannten Fall sind dies ebenfalls eine Funkfrequenzeinrichtung RF2, ein Mikroprozessor µP sowie unter der Voraussetzung eines Betriebs des Funkanschlusses gemäß dem DECT-Standard ein DECT Controller DC.

Der Anschluß von Funkteilnehmern kann aber auch in der Weise realisiert sein, daß Funkbasisstationen verwendet werden, wie sie auch in RLL-Anschlußnetzen Verwendung finden und zwischen diesen und den Abzweigungen des Koaxialkabels ein Schnittstellenmodul geschaltet ist, durch den die Funkbasisstation wie ein ISDN-Teilnehmer an das Koaxialkabel angeschlossen werden kann.

Diese Lösung ist in Figur 3 angedeutet, die neben einer Funkbasisstation RBS wie sie bei RLL-Anschlußnetzen Verwendung findet, einen Schnittstellenmodul MCIU zeigt, der neben einer Schnittstelleneinheit UP eine Steuerung CTR, eine Modulator/Demodulatoreinheit M/D sowie eine Funkfrequenzeinheit RF aufweist.

Gemäß weiterer Ausgestaltung der Erfindung kann im Falle der integrierten Anschlußlösung das Koaxialkabel für die Fernspeisung der Funkbasisstationen verwendet werden, ohne daß dies in der Figur 2 ausdrücklich dargestellt ist, wird hierbei zweckmäßigerweise so vorgegangen, daß nur der Hauptstrang des Koaxialkabels mit ausgenutzt wird und daß von den Abzweigungen von diesem Hauptstrang zu den Schnittstellenschaltungen gesonderte Speiseleitungen geführt werden.

Die Synchronisation der von den Funkbasisstaionen gesendeten Funkrahmen erfolgt von der Funktionseinheit HIU aus, die hierzu entsprechende Zeitmarken und Steuerinformationen über die Koax-Glasfaserstrecke Koax/LWL an die Anschlußeinheiten DIU-RBS sendet. Die Steuerinformationen dienen unter anderem dazu, zur Berücksichtigung von Laufzeitunterschieden ein Offset des Startzeitpunktes der Funkrahmen einzustellen. Die Veranlassung hierzu, sowie die Angabe des Offsetwerts kann von einem Bediensystem ML-OS aus erfolgen.

## Patentansprüche

1. Funkteilnehmeranschluß unter Verwendung eines hybriden Glasfaser-Koaxialkabel-Breitband-Anschlußnetzes, bei dem der Anschluß von Teilnehmern, unter anderem ISDN-Teilnehmern, unter Verwendung entsprechender Schnittstellenschaltungen an deren Koaxialkabelstrecken erfolgt,
**dadurch gekennzeichnet**, daß die Funkbasisstationen für die Funkteilnehmer (Fu) wie ISDN-Teilnehmer an die Abzweigungen zu den Koaxialkabelstrecken (Koax) angeschlossen sind, daß eine Datenübergabeinrichtung (DFR), die zu der zwischen den Glasfaserstrecken (LWL) und der elektrischen zur Vermitllungsstelle (LE) führenden Anschlußleitung liegenden Funktionseinheit (HIU) gehört, die 16kBit/s-D-Kanäle gemäß dem ISDN-Übertragungsprotokoll mehrerer Funkbasisstationen zu einem 64kbit/s-Signalisierungskanal zusammenfaßt, daß dieser 64kbit/s-Signalisierungskanal dort mit mehreren zu Funkbasisstationen bestehenden 64-kBit/s-B-Kanälen zusammengefaßt und mindestens einer PCM30-Leitung (PCM30) zugeführt wird, und daß diese wenigstens eine PCM30-Leitung an eine zentrale Funksteuereinheit (RDU) angeschlossen ist und dort funktionsgleich bedient wird wie in einem Radio-Local-Loop-Funkanschlußnetz die an dessen zentrale Funksteuerung angeschlossenen von dezentralen konzentrierenden Einheiten (RBC) kommenden Leitungen.

2. Funkteilnehmeranschluß nach Anspruch 1,
**dadurch gekennzeichnet**, daß die zentrale Funksteuereinheit (RDU) sowie die sie mit der Fernmeldevermittlungsstelle (LE), verbindenden Leitung gemeinsam mit einem Radio-Local-Loop-System (Tln; RNT; RBS; RBC; RDU) genutzt werden.

3. Funkteilnehmeranschluß nach Anspruch 1 oder 2,
**dadurch gekennzeichnet**, daß die Übertragungsprotokolle des Funkanschlusses oberhalb jener Protokollschichten tranportiert werden, die von der Datenübergabeeinrichtung (DFR) benutzt werden, und daß die genannte Zusammenfassung der 16kBit/s-Signalierungskanäle durch dieselbe Datenübergabeeinrichtung erfolgt, die diese Aufgabe für die ISDN-Signalisierungskanäle der an das Koaxial-Glasfaser-Hybrid-Anschlußnetz angeschlossenen ISDN-Teilnehmer erfüllt.

4. Funkanschlußnetz nach Anspruch 1 oder 2,
**dadurch gekennzeichnet**, daß in der Funktionseinheit (HIU) eine gesonderte Datenübergabeeinrichtung vorgesehen ist, die auch die Übertragungsprotokolle des Funkanschlusses transportiert.

5. Funkanschlußnetz nach einem der Ansprüche 1 bis 3,
**dadurch gekennzeichnet**, daß Funkbasisstationen verwendet werden wie sie auch bei einem Radio-Local-Loop-Funkanschlußnetz Verwendung finden, und daß diese jeweils über eine Anschlußeinheit an die Abzweigungen zu einer Koaxialkabelstrecke angeschlossen sind, die neben einem Übergang zwischen Zweidrahtleitung und Koaxialkabel eine U-Schnittstelle realisiert.

6. Funkteilnehmeranschluß nach einem der Ansprüche 1 bis 4,
**dadurch gekennzeichnet**, daß die Funkbasisstationen jeweils in eine Anschlußeinheit (DIU-RBS) integriert sind, die an die Abzweigungen zu einer Koaxialkabelstrecke angeschlossen sind.

7. Funkteilnehmeranschluß nach Anspruch 6,
**dadurch gekennzeichnet**, daß die Koaxialkabelstrecken (Koax) zur Fernspeisung der integrierten Funkbasisstation (CIU-RBS) ausgenutzt werden.

8. Funkteilnehmeranschluß nach einem der vorhergehenden Ansprüche, **dadurch gekennzeichnet**, daß zur Synchronisation der von den Funkbasisstationen gesendeten Funkrahmen von der Schnittstelleneinheit (HIU) aus Zeitmarken und Steuerinformationen an die Funkbasisstationen gesendet werden.

9. Funkteilnehmeranschluß nach Anspruch 8,
**dadurch gekennzeichnet**, daß über die Schnittstelleneinheit (HIU) von einem Bediensystem (ML-OS) aus für jede Funkbasisstation ein Offset für den Startzeitpunkt des dort ausgesendeten Funkrahmens eingestellt werden kann.
